Europäisches Patentamt

European Patent Office

Office européen des brevets

(11) Veröffentlichungsnummer: **0 295 701**
**A2**

## (12) EUROPÄISCHE PATENTANMELDUNG

(21) Anmeldenummer: 88109687.9

(22) Anmeldetag: 16.06.88

(51) Int. Cl.⁴: **F16N 5/00** , **F16N 3/12** ,
**F16N 13/16**

(30) Priorität: **17.06.87 ES 8701775**

(43) Veröffentlichungstag der Anmeldung:
**21.12.88 Patentblatt 88/51**

(84) Benannte Vertragsstaaten:
**AT BE CH DE FR GB GR IT LI NL SE**

(71) Anmelder: **Sanchez Larrauri, Alejandro**
**Berrosteguieta, 30**
**Vitoria(ES)**

(72) Erfinder: **Sanchez Larrauri, Alejandro**
**Berrosteguieta, 30** ˙
**Vitoria(ES)**

(74) Vertreter: **Feldkamp, Rainer, Dipl.-Ing. et al**
**Post Office Box 920**
**D-8000 München 33(DE)**

(54) **Handpresse, insbesondere Handschmierpresse.**

(57) Eine Handpresse zur Zuführung von pastenförmigen Produkten weist am vorderen Ende eines Hauptkörpers eine Ausstoßleitung (23) auf, in der ein Preßkolben hin- und herbeweglich angeordnet ist, der mit einer in einem abgestuften Zylinder im Inneren des Hauptkörpers verschiebbaren Kolbenbaugruppe verbunden ist. Der vordere Abschnitt des Zylinders weist einen kleineren Querschnitt als der hintere Abschnitt auf. Die Kolbenbaugruppe schließt vordere und hinteren Kolben ein, die in dem Zylinder axial verschiebbar sind und diesen in eine mittlere Lufteintrittskammer (11), in die eine Verbindungsleitung (41) von einem Drucklufteinlaßventil (20) mündet, eine hintere Druckkammer (12) und eine vordere Luftaustrittskammer (10) unterteilen. Der hintere Kolben weist Durchgangsöffnungen (16) auf, und die Druckkammer (12) ist über einen hohlen Mittelteil (15) der Kolbenbaugruppe und in dem Mittelteil ausgebildete Radialbohrungen (14) mit der vorderen Austrittskammer (10) verbunden, die eine Luftaustrittsöffnung (13) zur Atmosphäre hin aufweist. An dem hinteren Kolben ist eine Ventilbaugruppe mit einer inneren (24) und einer äußeren (25) Verschlußscheibe angeordnet, die miteinander verbunden und in Axialrichtung gegenüber dem hinteren Kolben zwischen einer ersten Betriebsstellung, in der die äußere Verschlußscheibe (25) den hohlen Mittelteil (15) verschließt, und einer zweiten Betriebsstellung verschiebbar sind, in der die innere Verschlußscheibe (24) die Durchgangsöffnungen (16) verschließt. Erste bzw. zweite Anschlagpuffer (17) bzw. (18) kommen in den Endstellungen der Kolbenbaugruppe mit den Verschlußscheiben (24,25) in Eingriff und verschieben diese in Axialrichtung zwischen der ersten und der zweiten Betriebsstellung.

Fig 2

## Handpresse, insbesondere Handschmierpresse

Die Erfindung bezieht sich auf eine Handpresse, insbesondere eine Handschmierpresse der im Oberbegriff des Patentanspruchs 1 genannten Art.

Derartige Handpressen werden im Hanwerk und in der Industrie dazu verwendet, pastenförmige Produkte oder Materialien unter Druck zuzuführen, wobei diese Produkte oder Materialien zum Füllen von Hohlräumen von Bauelementen, in Maschinen und dergleichen verwendet werden.

Ein spezielles Beispiel für eine derartige Handpresse ist durch eine Handschmierpresse gebildet, mit deren Hilfe Fett unter Druck in Hohlräume von Maschinen und Motoren eingepreßt wird, in denen bewegliche Bauteile laufen.

Bei derartigen Handschmierpressen tritt das Fett ausgehend von einer Kartusche oder einem Vorratsbehälter in eine Ausstoßleitung ein, in der ein Druckkolben arbeitet, der durch Druckluft von einer Druckluftquelle oder einem Kompressor betätigt wird, mit der bzw. mit dem die Handschmierpresse verbunden ist.

Es sind Handpressen bekannt, deren Betriebsweise einer vorgebenen Arbeitsfolge derart folgt, daß bei jeder Betätigung des Auslösehebels eine einzige vorgegebene Menge des Fettes oder Produktes ausgestoßen wird, das verarbeitet wird, sodaß es erforderlich ist, den Auslösehebel so oft zu betätigen, wie die vorgegebene Menge abgegeben werden soll. Dies kann sehr zeitaufwendig und mühsam sein, wenn eine große Menge des zu verarbeitenden Produktes oder Fettes im Laufe eines Tages verarbeitet werden muß.

Es sind weiterhin Handpressen bekannt, bei denen eine Menge des Produktes oder Fettes in einem kontinuierlichen Zyklus abgegeben werden kann. In diesem Fall ist es jedoch erforderlich, daß die Handpresse von einem äußeren unabhängigen Druckbehälter gespeist wird, was die Verwendung von zusätzlichen Bauteilen bedingt und zu insgesamt größeren Kosten für die Handpresse beiträgt.

Der Erfindung liegt die Aufgabe zugrunde, eine Handpresse der eingangs genannten Art zu - schaffen, die ein kontinuierliches Ausströmen von Produkt- oder Fettmengen bei einer einzigen Betätigung des Auslösehebels ermöglicht, ohne daß äußere getrennte Bauteile zusätzlich zu denen erforderlich sind, die für den Betrieb üblicher Handpressen erforderlich sind.

Diese Aufgabe wird durch die im kennzeichnenden Teil des Patentanspruchs 1 angegebenen Merkmale gelöst.

Vorteilhafte Ausgestaltungen und Weiterbildungen der Erfindung ergeben sich aus den Unteransprüchen.

Die erfindungsgemäße Handpresse weist gegenüberliegend zur Ausstoßleitung für das zu verarbeitende Produkt im Inneren des Hauptkörpers der Handpresse einen in Längsrichtung verlaufenden abgestuften Sitz oder Zylinder auf, der einen vorderen Abschnitt mit kleinerem Querschnitt und einen hinteren Abschnitt mit größerem Querschnitt umfaßt, wobei diese Abschnitte durch zwei Hülsen gebildet sind, in denen eine Axialbewegung entsprechender Kolben möglich ist, die zu einem einzigen beweglichen Körper vereinigt sind. Dieser bewegliche Körper ist mit dem Preßkolben verbunden und unterteilt den abgestuften Sitz oder die Bohrung des Hauptkörpers in drei Kammern, nämlich eine zwischen den beiden Kolben angeordnete Lufteintrittskammer, die dauernd mit dem Drucklufteinlaßventil in Verbindung steht, eine Druckkammer, die auf der Außenseite des den größeren Querschnitt aufweisenden hinteren Kolbens angeordnet ist und die ausschließlich entweder mit der Lufteintrittskammer oder mit einer dritten, eine Austrittskammer bildenden Kammer verbunden ist, die auf der Außenseite des vorderen, einen kleineren Querschnitt aufweisenden Kolbens angeordnet ist und dauernd mit der Atmosphäre verbunden ist. Die Verbindung der Druckkammer mit der Lufteintrittskammer oder der Austrittskammer wird durch eine Ventilbaugruppe bestimmt, die sich mit dem hinteren Kolben bewegt und bei dessen Axialverschiebung dadurch betätigt wird, daß sie gegen den einen oder den anderen von vorderen und hinteren Anschlägen oder Puffern zur Anlage kommt, die jeweils in der Lufteintrittskammer bzw. der Druckkammer angeordnet sind und das Ende des Druckhubes und des Rücklaufhubes des beweglichen Körpers bestimmen.

Wenn bei dieser Ausgestaltung der Handpresse und in der am weitesten hinten liegenden oder Rücklaufstellung des beweglichen Körpers der hintere Puffer gegen die Ventilbaugruppe einwirkt, so wird eine Verbindung zwischen der Lufteintrittskammer und der Druckkammer hergestellt, während die Verbindung zwischen dieser Druckkammer und der Austrittskammer verschlossen ist. Wenn in diesem Zustand der Auslösehebel betätigt wird, so treibt die Druckluft, die in die Druckkammer eintritt, den beweglichen Körper und damit den Preßkolben in einer derartigen Richtung an, daß dieser die Menge des Produktes aus der Ausstoßleitung herausdrückt, die in dieser Ausstoßleitung enthalten ist. Dieser Druckhub wird beendet, wenn die Ventilbaugruppe, die sich mit dem hinteren Kolben bewegt, an dem vorderen Puffer zur Anlage kommt, wodurch die Verbindung zwischen der Lufteintrittskammer und der Druckkammer unterbrochen wird, während andererseits die Verbindung zwischen der Druckkammer und der Austrittskammer hergestellt wird, sodaß die Druckluft, die den Druckhub hergerufend hat, zur Atmosphäre hin austreten kann. Wenn dann der Auslösehebel weiter niedergedrückt bleibt, so ruft die Druckluft, die in die Lufteintritskammer eintritt, den Rücklauf des beweglichen Körpers solange hervor, bis die Ventilbaugruppe auf den hinteren Puffer auftrifft, wodurch die Ausgangsstellung derart wieder hergestellt wird, daß wenn zu diesem Zeitpunkt die Druckluft weiter zugeführt wird, ein neuer Druckhub hervorgerufen wird, der dazu führt, daß erneut eine Menge des Produktes ausgestoßen wird und soweiter.

Durch die erfindungsgemäße Ausgestaltung der Handpresse ergibt sich der Vorteil, daß mehrere aufeinanderfolgende Druckhübe zur Abgabe des Produktes bei einer einzigen Betätigung des Auslösehebels erreicht werden können, ohne daß äußere Hilfseinrichtungen erforderlich sind, die zusätzlich zu den eigentlichen Bauteilen einer üblichen Handpresse verwendet werden müssen.

Bei der erfindungsgemäßen Ausgestaltung der Handpresse besteht die Ventilbaugruppe aus zwei Verschlußscheiben, nämlich einer inneren und einer äußeren Verschlußscheibe, die auf den beiden Seiten des hinteren Kolbens angeordnet sind, und durch durch diesen hindurchlaufende Bolzen miteinander vereinigt sind, die mit diametralem Spiel durch entsprechende Durchgangsöffnungen des Kolbens hindurchlaufen und zwischen den Scheiben einen Abstand ausbilden, der in geeigneter Weise größer als die axiale Stärke des Kolbens ist. Die innere Verschlußscheibe weist einen Außendurchmesser auf, der kleiner als der Innendurchmesser der hinteren Hülse ist, und sie ist derart befestigt, daß sie sich in Axialrichtung zwischen den Kolben des beweglichen Körpers bewegen kann. Diese Verschlußscheibe weist Dichtungen auf, die die Mündung der Durchgangsöffnungen verschließen. Die äußere Scheibe ist ihrerseits mit einem Dichtungsring versehen, die einen Verschlußsitz auf einer vorspringenden Stirnfläche der Mündung des hohlen Mittelteils des beweglichen Körpers ausbilden kann. Dieser hohle Mittelteil des beweglichen Körpers weist radiale Bohrungen auf, die in die Austrittskammer münden. Durch diese Ausgestaltung der Ventilbaugruppe ist, wenn die Dichtungen die Durchgangsöffnungen verschließen, der Dichtungsring von seinem Sitz getrennt, und umgekehrt. Wenn der Dichtungsring an der vorspringenden Stirnfläche des hohlen Mitteleils anliegt und dessen Mündung verschließt, so ist die äußere Verschlußscheibe immer noch ausreichend weit von dem Kolben getrennt, um eine einwandfreie Verbindung zwischen der Lufteintriffskammer und der Druckkammer über die Durchgangsöffnungen und den Durchlaßringspalt zwischen dem Umfang der inneren Scheibe und der Wand der hinteren Hülse sicherzustellen

Die Erfindung wird im folgenden anhand eines in der Zeichnung dargestellten Ausführungsbeispiels noch näher erläutert.

In der Zeichnung zeigen:

Fig. 1 eine Längsschnittansicht, die den Innenaufbau der Elemte einer Ausführungsform der Handpresse zeigt, wobei sich in dieser Figur der bewegliche Körper (4) in seiner hinteren Stellung befindet und der Auslösehebel (21) nicht betätigt ist,

Fig. 2 eine vergrößerte Ansicht, die die Ausführungsform der Handpresse in einer Stellung zeigt, in der sich der bewegliche Körper in seiner hinteren Stellung befindet und der Auslösehebel (21) betätigt ist,

Fig. 3 eine der Fig. 2 ähnliche Ansicht, in der die am weitesten vorne liegende Betriebsstellung des beweglichen Körpers (4) gezeigt ist, wobei der Betätigungshebel (21) betätigt ist.

In diesen Figuren werden die nachfolgend genannten Bezugsziffern für die folgenden Teile verwendet:

1.- Hauptkörper
2.- längsverlaufender abgestufter Sitz oder Zylinder
3.- Preßkolben
4.- beweglicher Körper oder Kolbenbaugruppe
5.- vorderer kleiner Kolben
6.- hinterer großer Kolben
7.- Ventilbaugruppe
8.- vordere Hülse
9.- hintere Hülse
10.- Austrittskammer
11.- Eintrittskammer
12.- Druckkammer
13.- Luftaustritt
14.- Radialbohrung
15.- hohler Mittelteil des beweglichen Körpers (4)
16.- Durchgangsöffnung des hinteren Kolbens (6)
17.- vorderer elastischer Puffer
18.- hinterer elastischer Puffer
19.- Drucklufteinlaßleitung
20.- Drucklufteinlaßventil
21.- Betätigungshebel
22.- Produkteintrittsöffnung
23.- Ausstoßleitung
24.- innere Verschlußscheibe der Ventilbaugruppe (7)
25.- äußere Verschlußscheibe der Ventilbaugruppe (7)
26.- Bolzen
27.- diametraler Abstand

28.- Dichtung

29.- Dichtungsring

30.- vorspringende Stirnfläche

31.- Feder

32.- Durchlaßringspalt

33.- Fenster der inneren Scheibe (24)

34.- Kupplungsstück

35.- Anschlußmündung

36.- Kartusche

37.- Speiseleitung

38.- Düse oder Mundstück

39.- Entlastungsventil

40.- Luftfilter

41.- innere Verbindungsleitung

42.- Strömungsrichtungspfeil

43.- Strömungsrichtungspfeil.

In den Zeichnungen ist eine bevorzugte Ausführungsform einer Handpresse, insbesondere einer Handschmierpresse dargestellt, die, wie dies aus den Figuren zu erkennen ist, im wesentlichen aus einem Hauptkörper (1) besteht, an dem die übrigen Teile befestigt sind. Diese Teile umfassen ein Kupplungsstück (34), das an der Drucklufteinlaßleitung (19) angeordnet ist, um die Verbindung mit einer Druckluftquelle zu ermöglichen, das Einlaßventil (20) für die Druckluft, das durch den Betätigungshebel (21) betätigt wird, eine Anschlußmündung (35) für eine Kartusche (36), die das Produkt oder Material enthält, das mit der Handpresse verarbeitet werden soll und das über eine Speiseleitung (35) in die Ausstoßleitung (23) abgegeben wird, ein Mundstück oder eine Düse mit einem Rückschlagventil, das in der vorderen Mündung der Ausstoßleitung (23) angeordnet ist, und ein Entlastungsventil (39), über das Luft in die Ausstoßleitung (23) beim Auswechseln der Kartuschen (36) eintritt.

Bei der bevorzugten Ausführungsform ist ein abgestufter längsverlaufender Sitz oder Zylinder (2) vorgesehen, der eine vordere Hülse (8) mit einem Querschnitt umfaßt, der kleiner ist als der der anderen, hinteren Hülse (9). In diesen Hülsen sind ein vorderer Kolben (5) bzw. ein hinterer Kolben (6) eines beweglichen Körpers oder einer Kolbenbaugruppe (4) verschiebbar angeordnet, an dessem vorderen Ende ein Preßkolben (3) angeordnet ist, der in der Ausstoßleitung (23) betätigbar ist, um das Ausstoßen einer vorgegebenen Menge des Produktes über das Mundstück (38) hervorzurufen.

Durch die Kolben (5,6) werden in dem abgestuften Sitz oder dem Zylinder (2) drei Kammern (10,11,12) ausgebildet, die voneinander getrennt sind und die mit Hilfe der Ventilbaugruppe (7) und verschiedenen, in den Teilen ausgebildeten Durchlaßöffnungen in geeigneter Weise in Verbindung miteinander gebracht werden können, um die gewünschte Betriebsweise zu erzielen. Diese Kammern sind wie folgt:

Eine vordere oder Austrittskammer (10), die dauernd mit der Atmosphäre über ein in der Austrittsöffnung (13) angeordnetes Filter (40) und mit einem durch eine Axialbohrung gebildeten hohlen Mittelteil (15) des beweglichen Körpers oder der Kolbenbaugruppe (4) in Verbindung steht, wobei dieser hohle Mittelteil beide Kolben (5,6) von einer Seite zur anderen durchquert.

Eine hintere oder Druckkammer, die über den hohlen Mittelteil (15) und die radialen Bohrungen (14) mit der Austrittskammer (10) verbindbar.

Eine mittlere oder Eintrittskammer (11), die dauernd mit dem Eintrittsventil (20) über eine innere Leitung (21) in Verbindung steht, und zwar unabhängig von der axialen Betriebsstellung der Kolbenbaugruppe (4), wobei diese mittlere Kammer mit der hinteren oder Druckkammer (12) über Durchgangsöffnungen (16) des hinteren Kolbens (6) verbindbar ist.

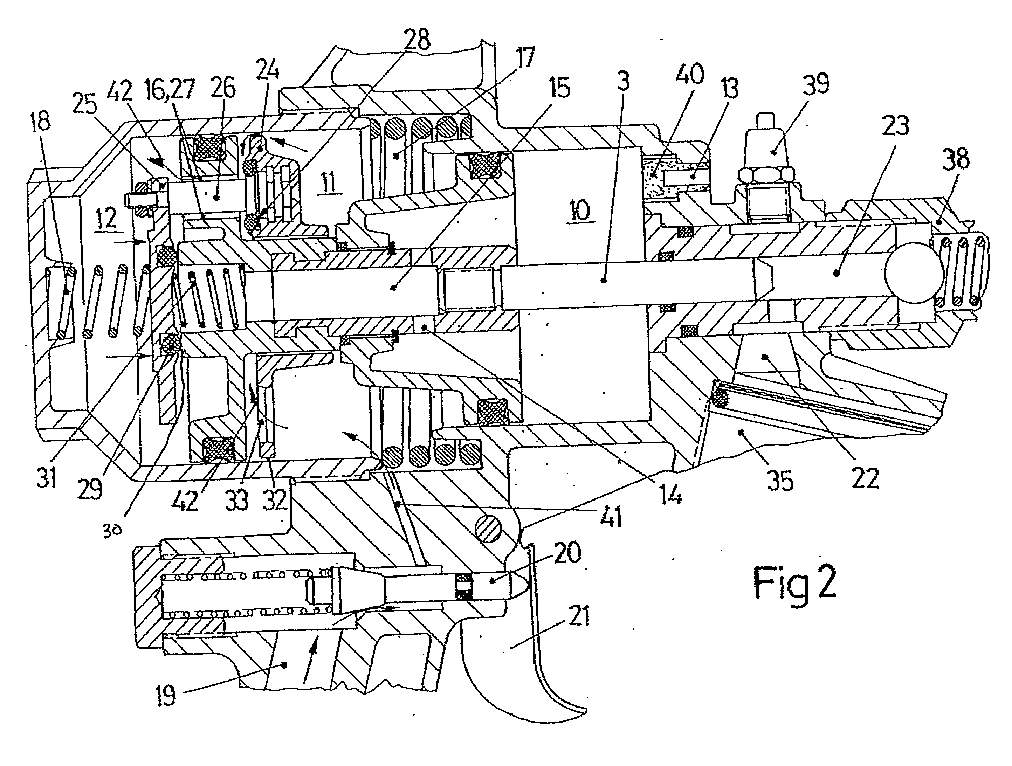

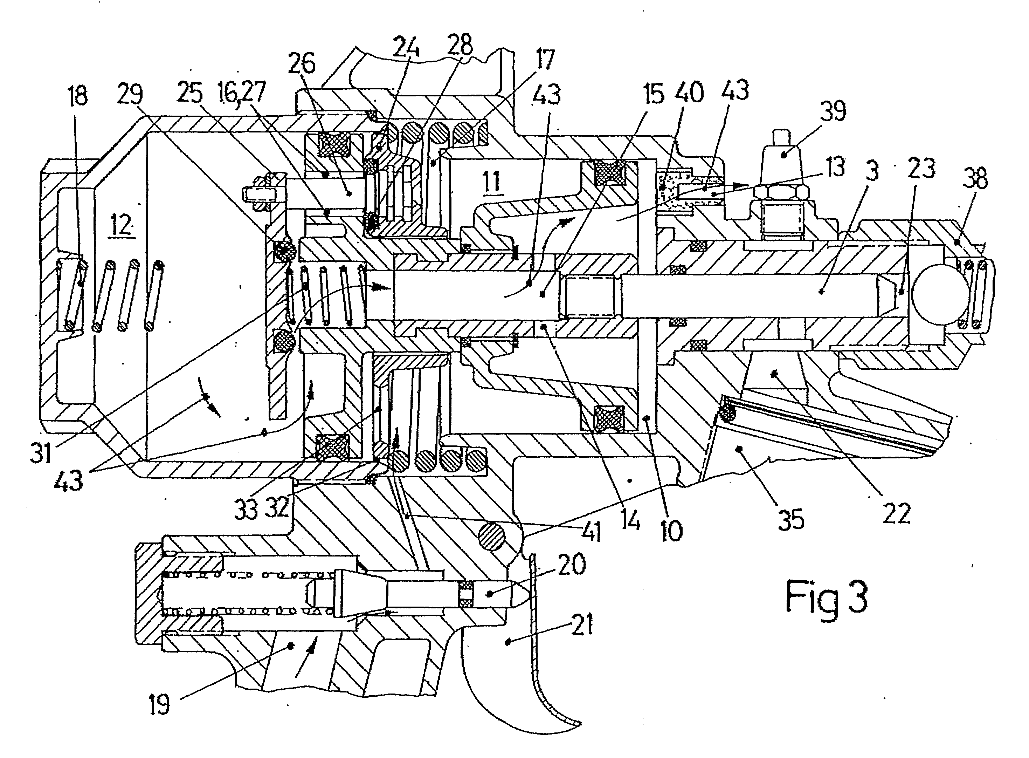

Die Fig. 2 und 3 zeigen klarer den Aufbau der Ventilbaugruppe (7) und ihrer Betriebsbestandteile. Diese Ventilbaugruppe besteht aus zwei Verschlußscheiben (24,25), die durch drei unter gegenseitigen Winkelabständen von 120 Grad angeordnete Bolzen (26) miteinander verbunden sind und sich durch die Durchgangsöffnungen (16) des hinteren Kolbens (6) erstrecken und dabei jeweils einen diametralen Abstand (27) bilden, der den Durchtritt der Luft zwischen der Eintrittskammer (11) und der Druckkammer (12) ermöglicht. Jeweilige an der inneren Verschlußscheibe (24) angeordnete Dichtungen (28) liegen mit ihrem Sitz benachbart zu den Mündungen der Durchgangsöffnungen (16) und können diese verschließen. Die innere Verschlußscheibe (24) ist koaxial zu dem beweglichen Körper (4) auf diesem so angeordnet, daß sie sich in Axialrichtung gegenüber diesem verschieben kann. Die äußere Verschlußscheibe (25) trägt einen Dichtungsring (29), der gegen die vorspringende Stirnfläche (30) des hohlen Mittelteils (15) des Kolbens (6) zur Anlage kommen kann, um die Verbindung zwischen dem hohlen Mittelteil (15) und der Druckkammer (12) zu verschließen. Die Bolzen (26) rufen einen derartigen Abstand zwischen den Verschlußscheiben hervor, daß wenn sich der Verschlußsitz des Dichtungsringes (29) ergibt, kein Verschlußsitz der Dichtungen (28) hervorgerufen wird, und umgekehrt. Bei der Betriebsweise der Handpresse erfolgt die Bewegung der Ventilbaugruppe (7) von der einen zur anderen Verschlußstellung in die andere durch das Anstoßen dieser Ventilbaugruppe gegen die eine oder die andere der Federn (17,18), die die elastischen vorderen und hinteren Anschlagpuffer (17,18) bilden und eine Begrenzung für den Arbeits- und Rücklaufhub darstellen.

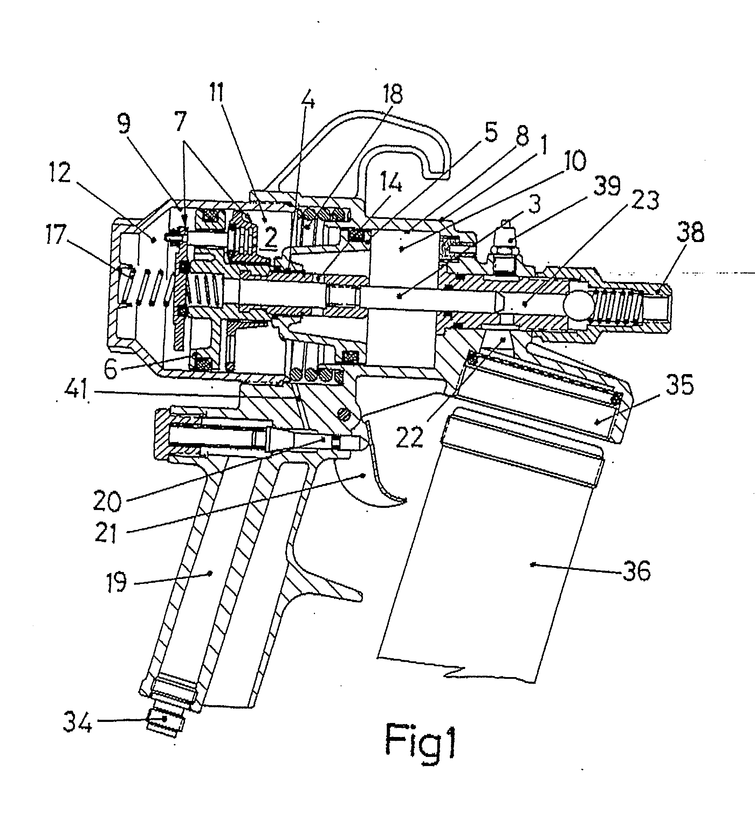

Zur Erläuterung der Betriebsweise soll von der Betriebsstellung nach Fig. 1 ausgegangen werden, in der sich die Kolbenbaugruppe (4) in ihrer am weitesten hinten liegenden Stellung befindet und in der die Einwirkung des hinteren Puffers (18) auf die äußere Verschlußscheibe (25) eine derartige Einstellung der Ventilbaugruppe (7) hervorruft, daß die Lufteintrittskammer (11) und die Druckkammer (12) über die Fenster (33) der inneren Verschlußscheibe (24), die Durchgangsöffnungen (16) des Kolbens (6) und den Durchlaßringspalt (32) zwischen der inneren Verschlußscheibe (24) und der hinteren Hülse (9) miteinander in Verbindung stehen.

Wenn dann gemäß Fig. 2 der Betätigungshebel (21) betätigt wird, so tritt die Druckluft über das Ventil (20) und die innere Leitung (41) in die Lufteintrittskammer (11) ein und gelangt von dieser aus in die Druckkammer (12), was bewirkt, daß die Kolbenbaugruppe (4) (und damit der Preßkolben (3) für das Fett oder ein anderes Produkt) nach vorne hin angetrieben wird, weil in dieser Richtung das in der Druck- oder Ausdehnungskammer (12) wirksame Volumen größer ist als das in der Lufteintrittskammer (11) wirksame Volumen, wobei diese Volumen durch die größeren und kleineren Querschnitte der Hülsen (8,9) bestimmt werden. Die Luftströmung bei dieser Betriebsphase oder dem Arbeitshub ist durch die Pfeile (42) dargestellt.

Das Ende dieses Arbeitshubes ist erreicht, wenn der der vordere Puffer (17) gegen die äußere Verschlußscheibe (25) der Ventilbaugruppe (7) einwirkt und diese dann in die Betriebsstellung nach Fig. 3 übergeht, in der die in der Druckkammer (12) komprimierte Luft entlang der durch die Pfeile (43) angedeuteten Strömungswege zur Atmosphäre hin austritt. Wenn zu diesem Zeitpunkt die Druckluftzufuhr an die Lufteintrittskammer (11) fortgesetzt wird, wird in dieser ein Druck hervorgerufen, der die Rücklaufbewegung hervorruft, weil in dieser Rücklaufrichtung sich das Volumen der Lufteintrittskammer (11) dadurch vergrößert, daß es zu einem größeren Teil durch die Hülse (9) mit größerem Querschnitt bestimmt ist.

Dieser Rücklaufhub wird beendet, wenn der hintere Puffer (18) die Ventilbaugruppe (7) erneut in die Ausgangsstellung (Fig. 1) zurückführt.

Wenn die Druckluftzufuhr weiter fortgesetzt wird, erfolgt ein neuer Arbeitshub, bei dem eine neue Menge des Fettes oder des Produktes ausgestoßen wird, das sich bereits in der Ausstoßleitung (23) befindet, und so fort.

Eine Feder (31) stellt sicher, daß sich die Verschlußscheibe (25) zu Beginn des Rücklaufhubes in einer von dem Kolben (6) getrennten Stellung befindet, wobei die anfängliche Trägheit überwunden wird.

Durch die Ausgestaltung des vorderen Puffers (17) und des hinteren Puffers (18) in Form von jeweiligen Federn werden Stöße an den Ender der jeweiligen Hübe gedämpft, sodaß die Geräuschentwicklung und die mechanischen Wirkungen dieser Stöße verringert werden.

## Ansprüche

1. Handpresse, insbesondere Handschmierpresse zur Zuführung von pastenförmigen Produkten, mit einer Ausstoßleitung (23) für die pastenförmigen Produkte, die am vorderen Ende eines Hauptkörpers (1) der Handpresse befestigt ist und in der ein Preßkolben hin- und herbeweglich angeordnet ist, der mit einem im Inneren des Hauptkörpers (1) beweglichen Körper (4) verbunden ist, und mit einem Drucklufteinlaßventil (20) zur Zuführung von Druckluft an das Innere des Hauptkörpers (1),
**dadurch gekennzeichnet,**
daß im Hauptkörper (1) ein langgestreckter abgestufter Zylinder (2) ausgebildet ist, der einen vorderen, der Ausstoßleitung (23) benachbarten Abschnitt mit kleinerem Querschnitt und einen hinteren Abschnitt mit größerem Querschnitt aufweist, wobei die vorderen und hinteren Abschnitte in zwei Hülsen (8) bzw. (9) gebildet sind, daß der bewegliche Körper (4) einen vorderen (5) und einen hinteren (6) Kolben einschließt, die in dem vorderen bzw. hinteren Abschnitt des Zylinders (2) axial verschiebbar sind und zwischen denen eine mittlere Lufteintrittskammer (11) abgrenzt ist, in die eine innere Verbindungsleitung (41) mündet, die die Lufteintrittskammer (11) dauernd mit dem Drucklufteinlaßventil (20) verbindet, wobei die Kolben (5,6) in dem Zylinder (2) weiterhin eine hintere Druckkammer (12) und eine vordere Luftaustrittskammer (10) abgrenzen, daß der hintere Kolben (6) Durchgangsöffnungen (16) aufweist, daß die Druckkammer (12) über einen hohlen Mittelteil (15) des beweglichen Körpers (4) und in dem Mittelteil ausgebildete Radialbohrungen (14) mit der vorderen Austrittskammer (10) in Verbindung steht, daß die Austrittskammer (10) eine Luftaustrittsöffnung (13) zur Atmosphäre hin aufweist, daß an dem hinteren Kolben (6) eine Ventilbaugruppe (7) angeordnet ist, die eine auf der dem ersten Kolben (5) zugewandten Seite des hinteren Kolbens (6) angeordnete innere Verschlußscheibe (24) und eine auf der gegenüberliegenden Seite dieses Kolbens (6) angeordnete äußere Verschlußscheibe (25) umfaßt, die miteinander verbunden und in Axialrichtung gegenüber dem hinteren Kolben (6) zwischen einer ersten und einer zweiten Betriebsstellung verschiebbar sind, daß in der ersten Betriebsstellung die äußere Verschlußscheibe (25) die Verbindung über den hohlen Mittelteil (15) verschließt, während in der zweiten Betriebsstellung die innere Verschlußscheibe (24) die Durchgangsöffnungen (16) verschließt, daß in der Lufteintrittskammer (11) und in der Druckkammer (12) erste bzw. zweite Anschlagpuffer (17) bzw. (18) angeordnet sind, die in den Endstellungen des beweglichen Körpers (4) mit den Verschlußscheiben (24,25) in Eingriff kommen und diese in Axialrichtung zwischen der ersten und der zweiten Betriebsstellung verschieben, wobei die am weitesten hinten liegende Stellung des beweglichen Körpers (4) der ersten Betriebsstellung der Verschlußscheiben (24,25) entspricht, in der die innere Verschlußscheibe (24) das Strömen von Druckluft von der Lufteintrittskammer (11) in die Druckkammer (12) bei einer Betätigung des Betätigungshebels (21) für das Drucklufteinlaßventil ermöglicht, sodaß der bewegliche Körper (4) und der damit verbundene Preßkolben (3) einen Arbeitshub ausführen, bei dem das Produkt ausgestoßen wird, daß am Ende des Arbeitshubes die innere Verschlußscheibe (24) mit dem vorderen Puffer (17) in Eingriff kommt und die Ventilbaugruppe (7) in die zweite Betriebsstellung verschiebt, in der die äußere Verschlußscheibe (25) den Austritt von Druckkluft aus der Druckkammer (12) über den hohlen Mittelteil (15) in die Austrittskammer (10) und dann zur Atmosphäre hin ermöglicht, während die Durchgangsöffnungen (16) durch die innere Verschlußscheibe (24) verschlossen werden, sodaß bei fortgesetzter Betätigung des Betätigungshebels (21) eine Rücklaufbewegung der beweglichen Baugruppe hervorgerufen wird, bis der hintere Anschlagpuffer (18) an die äußere Verschlußscheibe (25) anstößt, wobei die Ausgangsstellung wieder hergestellt wird und ein neuer Arbeitshub begonnen wird.

2. Handpresse nach Anspruch 1, **dadurch gekennzeichnet,** daß die innere Verschlußscheibe (24) und die äußere Verschlußscheibe (25) der Ventilbaugruppe über Bolzen (26) verbunden sind, die sich durch die Durchgangsöffnungen des hinteren Kolbens (6) mit diametralem Abstand (27) erstrecken und die die Verschlußscheiben (24,25) in einem Axialabstand voneinander halten, der größer als die axiale Stärke des hinteren Kolbens (6) zwischen der Innenseite dieses Kolbens und dessen vorspringender Stirnfläche (30) ist, in die der hohle Mittelteil (15) des beweglichen Körpers (4) mündet.

3. Handpresse nach Anspruch 1 oder 2, **dadurch gekennzeichnet,** daß die innere Verschlußscheibe (24) mit Fensteröffnungen (53) versehen ist und einen Außendurchmesser aufweist, der kleiner als der Innendurchmesser der hinteren Hülse (9) ist, und däß die innere Verschlußscheibe (24) in Axialrichtung zwischen den beiden Kolben (5,6) des beweglichen Körpers (4) geführt ist.

4. Handpresse nach Anspruch 2 oder 3, **dadurch gekennzeichnet,** daß die innere Verschlußscheibe Dichtungen (28) aufweist, die um den Umfang der Durchgangsöffnungen herum angeordnet sind, um diese zu verschließen, daß die äußere Verschlußscheibe (25) mit einem Dichtungsring (29) versehen ist, der der vorspringenden Stirnfläche (30) gegenüberliegt und die Mündung des hohlen Mittelteils (15) umgibt, der an seinem anderen Ende über Radialbohrungen (14) in die Austrittskammer (10) mündet, daß die Ventilbaugruppe derart ausgebildet ist, daß wenn die Dichtungen (28) die Durchgangsöffnungen (16) verschließen, der Dichtungsring (29) von der vorspringenden Stirnfläche (30) getrennt ist, und umgekehrt, und daß, wenn der Dichtungsring (29) die Mündung des hohlen Mittelteils an der vorspringenden Stirnfläche (30) verschließt, ein ausreichender Abstand zwischen der äußeren Scheibe (25) und dem Kolben (6) besteht, um eine ausreichende Strömung zwischen der Lufteintrittskammer (11) und der Druckkammer (12) durch die Durchgangsöffnungen (16), die Fenster (33) und den Durchlaßringspalt (32) zwischen dem Außenumfang der inneren Scheibe (24) und dem Innenumfang der hinteren Hülse (9) zu ermöglichen.

5. Handpresse nach einem der Ansprüche 1 bis 4, **dadurch gekennzeichnet,** daß die vorderen (17) und hinteren (18) Anschlagpuffer durch Federn gebildet sind, daß die Feder des vorderen Anschlagpuffers (17) zwischen den beiden Hülsen (8,9) angeordnet ist und einen Innendurchmesser ausweist, der kleiner als der Außendurchmesser der inneren Verschlußscheibe der Ventilbaugruupe (7) ist, daß die Feder des hinteren Anschlagpuffers (18) ein im Boden der Druckkammer (12) festgelegtes Ende sowie eine derartige Länge aufweist, daß sein freies Ende das Ende des Rücklaufhubes bestimmt.

6. Handpresse nach einem der vorhergehenden Ansprüche, **dadurch gekennzeichnet,** daß in dem hohlen Mittelteil (15) des beweglichen Körpers (4} eine Feder (31) mit geringerer Federkraft als die Feder des hinteren Anschlagpuffers (18) und dieser entgegenwirkend angeordnet ist, daß die Feder (31) gegen die äußere Verschlußscheibe (25) der Ventilbaugruppe (7) einwirkt und sie in Abstand von der vorstehenden Stirnfläche (30) hält, bis die Feder des hinteren Anschlagpuffers (18) gegen die äußere Verschlußscheibe (25) einwirkt.

7. Handpresse nach einem der vorhergehenden Ansprüche, **dadurch gekennzeichnet,** daß die Durchgangsöffnung (16) des hinteren Kolbens (6) und die Fenster der inneren Verschlußscheibe (24) unter gegenseitigen Winkelabständen von 120 Grad und abwechselnd zueinander angeordnet sind.

Fig1

Fig 2

Fig 3

EP 0 295 701 A2